# EUROPEAN PATENT SPECIFICATION

(11) **EP 1 358 998 B1**
(45) Date of publication and mention of the grant of the patent: **16.01.2008**
(21) Application number: 02710399.3
(22) Date of filing: 30.01.2002
(51) Int. Cl.: B29D 30/20, B29D 30/30

(54) **TIRE MANUFACTURING METHOD**
VERFAHREN ZUR HERSTELLUNG VON REIFEN
PROCEDE DE FABRICATION DE PNEUMATIQUE

(30) Priority: 31.01.2001 JP 2001022694; 31.01.2001 JP 2001022695; 31.01.2001 JP 2001022696
(43) Date of publication of application: 05.11.2003
(73) Proprietor: Bridgestone Corporation, Tokyo 104-0031 (JP)
(72) Inventor: IIDUKA, Shuhei c/o BRIDGESTONE CORP. Techn. Ctr, Kodaira-shi, Tokyo 187-0031 (JP)
(74) Representative: Whalley, Kevin
(86) International application number: PCT/JP2002/000714
(87) International publication number: WO 2002/060676

(56) References cited:
- EP-A- 0 854 054
- EP-A2- 0 873 852
- EP-A2- 0 970 797
- EP-A2- 1 016 555
- EP-A2- 1 033 218
- WO-A-00/03867
- JP-A- 9 029 858
- JP-A- 2000 094 542
- JP-A- 2002 079 590
- US-A- 3 717 529
- US-A- 4 094 354

## Description

This invention relates to a method of producing a tire, particularly a pneumatic radial tire. Especially, the invention proposes a technique wherein it is possible to simply, rapidly and accurately form green case constituent members having various forms and sizes and tire constituent members such as belt tread constituent members and the like in the building of a green tire and also the uniformity, balance and the like of a product tire can be advantageously improved while enhancing a building operation efficiency of the green tire.

In the production of the tire, particularly the building of the green tire, it is widely and generally conducted to successively wind and stick various tire constituent members each previously formed into given form and size and supplied from a preceding step around a building drum in any one of a band building step, a green case building step and a belt-tread building step. Also, it is conducted to deform the previously stuck tire constituent members followed to the deformation of a carcass band or the like in the turning of an end portion of the carcass band, the shaping of the green case or the like.

According to the conventional technique of previously providing the tire constituent members having the given form and size, however, there is a problem that the productivity is low because the size, structure and so on of the tire are diversified in recent years to increase the kind of members to be provided at the preceding step and to raise a frequency in change of size, form or the like of the members in the building of the green tire. On the other hand, there are problems that a space required for storing many kinds of the members becomes large and many operating steps, long time and so on are taken in the forming of many kinds of the members and the like. Furthermore, there are problems that the previously formed, frequently band-shaped tire constituent members cause the change of size such as width, thickness or the like in their longitudinal direction, the change of mass per unit length and so on, and the formation of a joint portion through the joining of both end portions of the tire constituent member is required in the winding and sticking on the building drum to degrade uniformity and balance of a tire built with such tire constituent members and hence a product tire.

Lately, since the form or the like required in the tire constituent members becomes complicated with the advance of tire performance, if such tire constituent members are wound on the building drum according to the conventional technique, there is a problem that the deterioration of winding position and form precision, form breakage of the joint portion on the building drum and the like are caused by an influence of difference between inner and outer circumferential lengths and the like due to the complication of the form and hence the degradation of the uniformity and balance of the tire is caused. Also, since the forms of the tire constituent members are subjected to a restriction based on a rubber forming apparatus forming them at the preceding step, there may be caused a case that a product can not be integrally formed as is expected, and hence if the constituent member is divided into plural parts for providing the given form, the number of the parts increases to increase the number of winding steps on the building drum and further lower the forming operation efficiency of the green tire and to degrade the uniformity and balance.

Moreover, when the same tire constituent member is constructed with a laminate of different kinds of plural rubber formed members, the form of the tire constituent members having a lamination structure is not stabilized by difference in properties between mutual different rubbers and the like.

It is, therefore, a main object of the invention to provide a method of producing a tire in which a preparation such as previous forming, storing or the like of tire constituent members is omitted by winding a narrow-width strip of an uncured rubber on an outer circumferential side of a building drum at a given place(s) to form a tire constituent member or a part thereof having given form and size, and the productivity of the green tire is largely improved by omitting the working step number, time, space and the like for such a preparation and also the uniformity, balance and the like of a product tire can be advantageously improved by sufficiently absorbing the change in various sizes, mass and the like and eliminating the joint portion of the tire constituent member from the green tire. It is another object of the invention to provide a method of producing a tire in which a part or a whole of the tire constituent member having a form and size as is expected can be always surely and accurately formed even if it is made from plural kinds of rubber materials without requiring the division of the tire constituent member and also there is no danger of degrading the position and shape precisions due to the winding of the previously formed tire constituent member itself, and the uniformity and balance of the product tire can be largely improved in addition to the forming operation efficiency of the tire and further there is no danger of causing the degradation of performances due to the presence of the joint portion in the tire constituent member.

Attention is also drawn to the disclosures of EP-A-0873852, EP-A-1016555, US-A-3717529, EP-A-1033218, EP-A-0970797, US-A-4094354, WO00/03867, EP-A-0854054, and JP-09-029858A.

The method of producing the tire accordingly to the invention lies in that an uncured rubber strip is wound on an outer circumferential side of a building drum at a given place(s) before or after the formation of a carcass band in a band building step or a green case building step for the building of a green tire to form a green case constituent member or a part thereof, and a green case after the building of the green case is subjected to a shaping and a belt and a tread are stuck onto an outer circumferential side thereof, and wherein the winding of the strip is directly carried out on the building drum so as to overlap at least parts of the strip in the widthwise direction with each other, and wherein a cross-sectional shape of the strip is a slant face wherein at least one side wall of the strip is inclined at a given angle with respect to a vertical face, and the uncured rubber strip has a width of 3 to 20 mm.

In this method, the uncured rubber strip formed, for example, under an action of an extruder, an injection extruder, a fixed displacement extruder or the like and having a width of 3-20 mm and a thickness of about 0.2-3 mm is wound and laminated on the outer circumferential side of the building drum to directly form a whole or a part of the green case constituent member having given form and size, whereby a previous preparation of a band-shaped green case constituent member having a given form or the like is not required and the building efficiency of the green tire and hence the productivity of the green tire can be improved without requiring a large storing space or the like. Also, all the problems resulted from the scattering of size, weight or the like in the previously formed green case constituent members, the joining of end portions of these constituent members and so on can be solved to largely improve the uniformity, balance and the like of the product tire.

Furthermore, even when the given green case constituent member has a complicated form, a whole or a part of such a constituent member can be formed simply and easily with higher position precision and size precision by directly winding and laminating the strip without being subjected to a restriction by a rubber forming apparatus or the like and increasing the number of parts and forming the joint portion. From this point, the forming operation efficiency of the green tire can be enhanced to largely improve the uniformity and balance of the product tire.

Moreover, this is true even in a case that only a part of the green case constituent member having a shape of hardly conducting the integrally united forming at the preceding step or hardly winding on the building drum is formed by the winding lamination of the strip.

The winding of the strip is carried out so as to overlap at least parts of the strip in the widthwise direction with each other.

Furthermore, the shape of the strip, e.g. cross-sectional shape thereof is a slant face wherein at least one side wall of the strip is inclined at a given angle with respect to a vertical face in correspondence to the shape of the green case constituent member or a part thereof. In this case, a dimensional precision of the resulting green case constituent member can be further enhanced.

Moreover, when two or more kinds of the strips are simultaneously or sequentially wound, one green case constituent member or a part thereof may be made of plural kinds of rubber materials.

In the invention, the green case constituent member or the like can be formed by winding the strip at an outer circumferential side of a carcass band at a somewhat enlarged state or a non-enlarged state thereof in the building step of the green case. Even in this case, the same action and effect as mentioned above can be produced based on the winding and attaching of the strip.

Moreover, when the green case constituent member or a part thereof such as bead filler, sidewall, rubber chafer, side reinforcing layer for a run-flat tire or the like to be deformed by the building of the green case itself or the shaping of the green case is formed by the winding of the strip at a required timing, there can effectively be removed fears such as losing of shape, lowering of size precision and the like as in a case that the green case constituent member previously shaped into a given form or the like is wound and attached on the building drum and then deformed by shaping.

In the band building step, when a green case constituent member such as an innerliner rubber, a toe rubber, a side reinforcing layer or the like or a part thereof is formed by winding the strip before the formation of the carcass band, the same action and effects as mentioned above can be produced.

The invention will be further described with reference to the accompanying drawings, wherein
FIG. 1 is a section view of a half portion of a building drum in an axial direction illustrating an embodiment of forming a bead filler at a green case building step.
FIG. 2 is a section view illustrating a forming embodiment on a part of the bead filler likewise FIG. 1.
FIG. 3 is a section view illustrating an embodiment of forming a reinforcing layer likewise FIG. 1.
FIG. 4 is a section view illustrating an embodiment of forming various green case constituent members after an end portion of a carcass band is turned up likewise FIG. 1.
FIG. 5 is a perspective view illustrating another embodiment of forming a part of a bead filler.
FIG. 6 is a diagrammatic cross-section view illustrating an embodiment of falling down a bead filler built body portion.
FIG. 7 is a perspective view illustrating an embodiment of forming an innerliner and a toe rubber at a band building step.
FIG. 8 is a perspective view illustrating an embodiment of forming an innerliner and a toe rubber together with an extruder.
FIG. 9 is a diagrammatic section view of a half portion of a building drum in an axial direction illustrating an embodiment of forming an innerliner and a side reinforcing layer.
FIG. 10 is a perspective view illustrating an embodiment of forming a green case constituent member on an outer circumferential side of a carcass band.
FIG. 11 is a perspective view illustrating an embodiment of forming a belt-tread constituent member at a belt-tread building step.

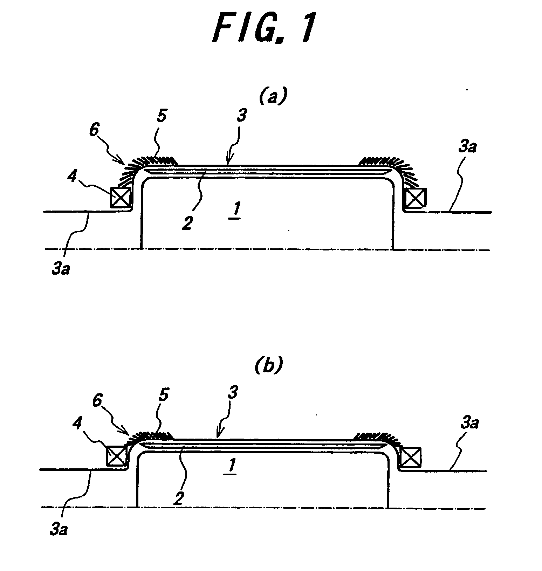

FIG. 1 is a section view of a half portion of a building drum in an axial direction illustrating a green case building step generally called as a first building step, which shows a case that a bead filler as an example of a green case constituent member is formed on an outer circumferential side of a cylindrically formed carcass band by winding lamination of an uncured rubber strip.

In this figure, numeral 1 is a building drum, numeral 2 an innerliner attached onto a circumferential face thereof, and numeral 3 a carcass band cylindrically formed by winding at least one rubberized ply cord layer on an outer circumferential side of the innerliner 2.

Under a some size-enlargement of the building drum 1 as shown in FIG. 1(a) or an extremely slight size-enlargement of the building drum I as shown in FIG. 1(b), a bead core 4 is arranged adjacent to each end portion of the building drum 1 and on an outer circumferential side of the carcass band 3, and then an uncured rubber strip 5 having a width of 3-20 mm and a thickness of 0.2-3 mm and preferably a selected and required cross-sectional profile shape is spirally wound from an outer circumferential side of the bead core 4 toward an axially central portion side of the carcass band 3 under a locking action of the bead core 4 and the winding position is displaced over a required range in the axial direction of the band while overlapping at least a part of the strip in a widthwise direction thereof with each other every winding and such winding procedure is carried out once or plural times to form a bead filler 6 having expected shape and size as a whole.

In this case, the cross-sectional profile shape of the uncured rubber strip 5 an upward slant face wherein at least a side wall of the strip 5 is inclined at a given angle with respect to a vertical face in the cross section for more precisely realizing the expected shape of the bead filler 6.

Also, such a bead filler 6 may be formed by winding the strip 5 made of one rubber material containing a filler or no filler, or may be formed by winding strips 5 made of two or more different materials in a given order.

After the arrangement of the bead filler 6, each end portion 3a of the carcass band 3 is turned and also a rubber chafer, a sidewall and other required green case constituent members are formed by the winding of the uncured rubber strip as mentioned above, or green case constituent members made of previously shaped rubber products are attached to form a given green case.

Moreover, a central portion of the thus obtained green case in an axial direction thereof is largely expanded and deformed at subsequent shaping step and a belt, a tread and the like are attached to an outer circumferential side thereof to form a green tire.

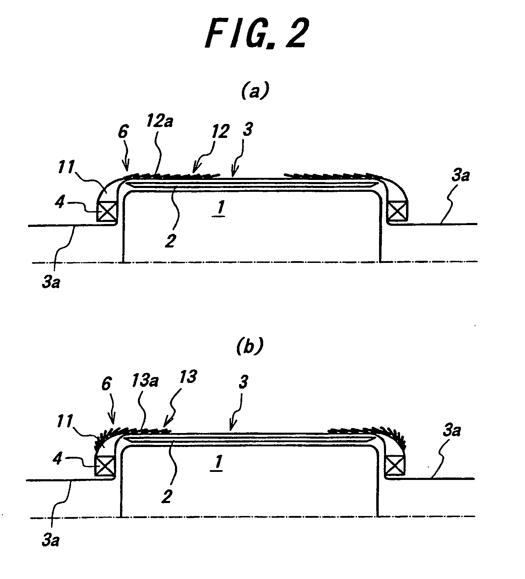

FIG. 2 is a section view of another embodiment likewise the above, which shows a case that a bead filler part 11 made of a previously shaped rubber product is arranged adjacent to the bead core 4 and a portion being thinner than the bead filler portion 11 and increasing a bending amount with respect to the built shape of the bead filler for a required attachment, i.e. a portion easily producing wrinkles in the attachment to the outer circumferential face of the carcass band and making difficult the attachment to appropriate positions is formed by winding lamination of the uncured rubber strip.

A remaining bead filler portion 12 thinly and long extending toward a central portion side of the carcass band 3 with respect to the bead filler portion 11 as shown in FIG. 2(a) or a remaining bead filler portion 13 at a relative position to the central portion side of the carcass band with respect to the bead filler portion 11 and made of the same rubber material as in the bead filler portion 11 or scarcely different material as shown in FIG. 2(b) is formed by winding lamination of respective uncured rubber strip 12a, 13a under the same size-enlargement of the building drum 1 as in FIG. 1(a).

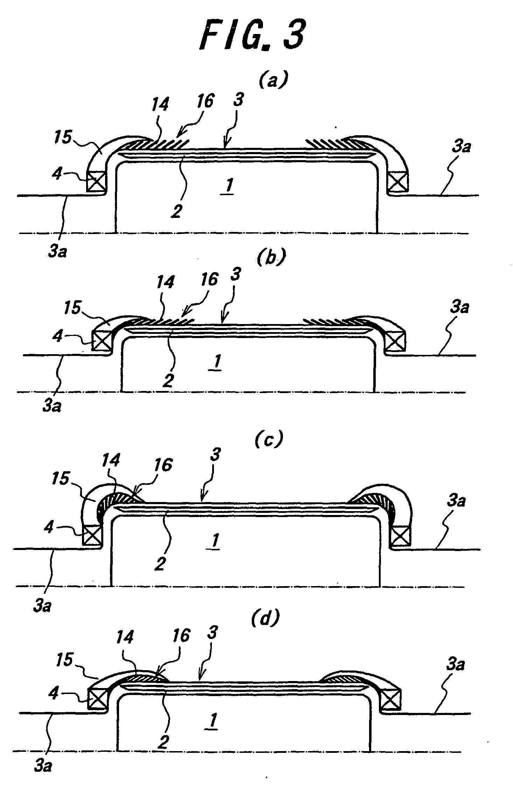

FIG. 3 shows a case that a reinforcing layer made of a wound laminate of a rubber strip is arranged before the arrangement of the bead filler made of a rubber shaped product. In FIG. 3(a), an uncured rubber strip 14 is spirally wound toward the central portion side of the carcass band 3 over a wide range thereof to form a reinforcing layer 16 overlapping with the bead filler 15 in the end portion of the building drum 1 and a vicinity thereof.

In FIG. 3(b), the same reinforcing layer 16 as mentioned above is formed when a size-enlarging amount of the building drum 1 is made extremely small.

In FIGS. 3(c) and (d), the reinforcing layer 16 completely enclosed with the bead filler 15 is formed in required shape and size by the winding of the rubber strip 14 at states of large and small size-enlarging amounts of the building drum 1, respectively.

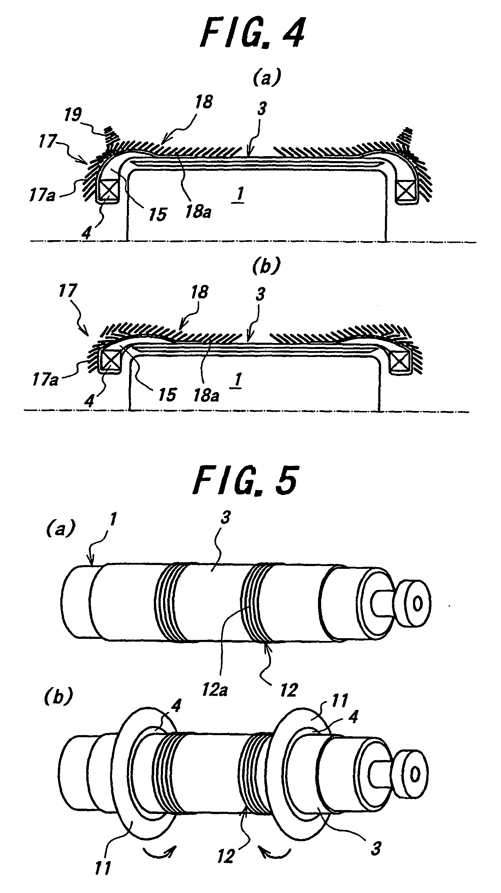

In FIG. 4, a bead filler 15 made of a previously shaped rubber product is arranged from the bead core 4 to the building drum 1, while each of a rubber chafer 17 and a sidewall 18 having given shape and size is formed by successively winding uncured rubber strips 17a, 18a at a state of turning each end portion 3a of the carcass band 3. In FIG. 4(a), a rim guard 19 is further formed in the same manner as mentioned above.

Moreover, FIG. 4(b) shows a case that the rubber chafer 17 and the sidewall 18 are formed under a slight size-enlarging amount of the building drum 1 as are expected.

Although the embodiments according to the invention are explained, the invention is applicable to not only the building of a green case of a tire having no bead core or so-called coreless tire but also the winding formation of a green case constituent member or a part thereof before the size-enlarging deformation of the carcass band.

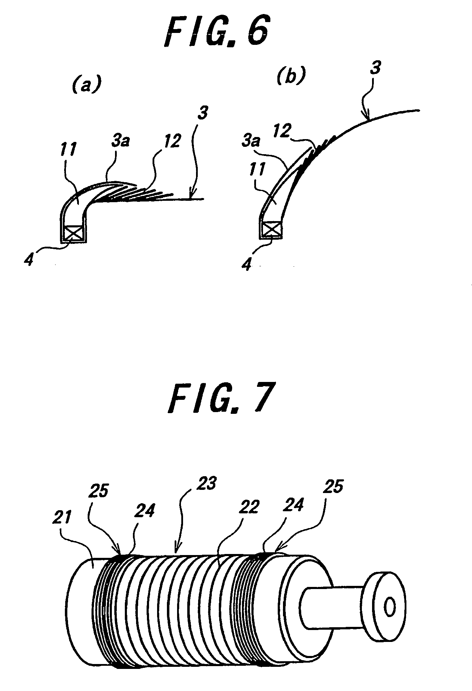

FIG. 5 is a perspective view of the latter case, in which the uncured rubber strip 12a is spirally wound on the carcass band 3 before the size-enlargement as shown in FIG. 5(a) to previously form the remaining thin bead filler portion 12 as shown in FIG. 2, and then the bead filler portion 11 integrally united with the bead core 4 is fitted onto the carcass band 3 as shown in FIG. 5(b) and thereafter the bead filler portion 11 is fallen down on the remaining bead filler portion 12, for example, accompanied with the turning of the end portion 3a of the carcass band 3, for example, under a state of somewhat enlarging the size of the carcass band 3 as shown in FIG. 6(a) or under a state of enlarging near to a shaping posture of a green case as shown in FIG. 6(b) and integrally united with the remaining bead filler portion 12 to form a bead filler.

Thus, when the remaining bead filler portion 12 is formed by the winding lamination of the strip 12a, an influence by a difference between inner size and outer size is effectively removed as compared with the green case constituent member made of a shaped body to eliminate bad influence such as bending or the like, whereby the uniformity of a product tire can be improved.

A cushion rubber arranged on the carcass band, a belt under-cushion arranged between the carcass band and the belt and the like may be formed by winding the uncured rubber strip though they are not shown.

FIG. 7 is a perspective view of a band building step, which shows a case that an innerliner as a green case constituent member and a toe rubber partly overlapped with an end portion of the innerliner are arranged on a band building drum or a green case building drum prior to the formation of the carcass band.

In this case, an uncured rubber strip 22 having a size of 3-20 mm in width and 0.2-3 mm in thickness and a required cross-sectional profile shape, which is extruded through, for example, a die or the like of an extruder, is spirally wound on a circumferential face of a band building drum 21 under the rotation of the band building drum 21, and the winding position is displaced once or plural times within a given range in an axial direction of the drum while preferably overlapping at least a part of the strip in a widthwise direction every winding to form an innerliner 23 having expected shape and size as a whole. Besides, an uncured rubber strip 24 of the same or different material as in the strip 22 is partly overlapped with each end portion of the innerliner 23 and wound and laminated over a given range to form a toe rubber 25 defining a toe portion of a tire bead portion.

Even in this case, the cross-sectional profile shape of each of the strips 22, 24 has an upward slant face wherein at least a side wall of the strip is inclined at a given angle with respect to a vertical face for enhancing the shape precision of the innerliner 23 and the toe rubber 25.

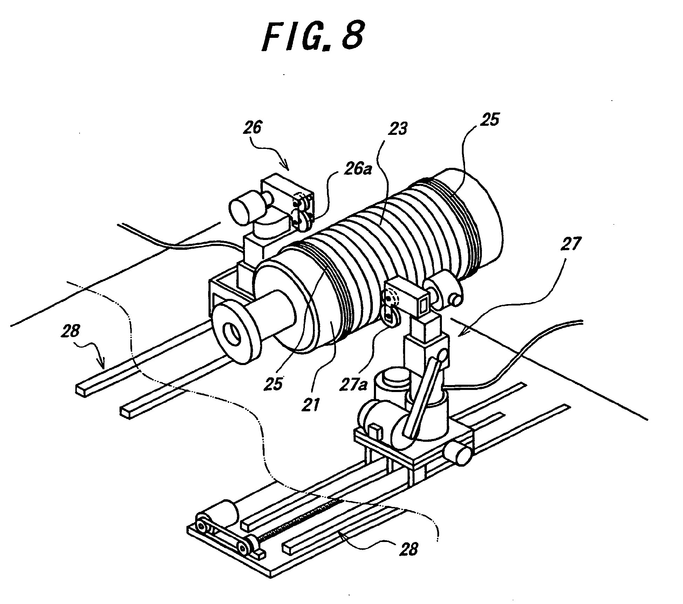

FIG. 8 shows the forming embodiment of the innerliner 23 and the toe rubber 25 as a green case constituent member together with an extruder.

In this case, two fixed displacement extruders are used, in which the strip 22 for the innerliner is extruded through a roller die 26a of an extruder 26 for the strip 22 and the strip 24 for the toe rubber is extruded through a roller die 27a of an extruder 27 for the strip 24. These extruders 26, 27 themselves are displaced with respect to the rotating band building drum 21 over a given range in an axial direction thereof under guiding with the respective guide rails 28, whereby the innerliner 23 and the toe rubber 24 can be rapidly formed at the required overlap state as is expected.

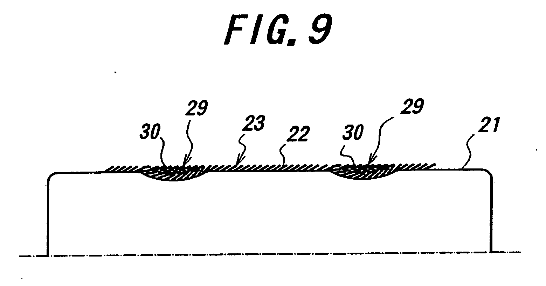

FIG. 9 is a diagrammatic section view of a building drum in its axial direction, which shows a case that a side reinforcing layer for a run-flat tire as the other green case constituent member is formed on an outer circumference of the innerliner. In this case, the uncured rubber strip 22 is wound on the band building drum 21 to form the innerliner 23, and thereafter a side reinforcing layer 29 located at a given interval in the axial direction of the building drum 21 and mainly arranged in the sidewall portion of a product tire is formed by spiral winding of an uncured rubber strip 30.

In this case, when a depression serving to specify the winding position of the uncured rubber strip 30 for the side reinforcing layer is formed on the band building drum 21 as shown in the figure, the precision of forming position, shape, size and the like of the side reinforcing layer 30 cam be further enhanced. Also, by making the volume of the depression equal to a volume of the required side reinforcing layer 30, when the ply cord layer is subsequently shaped into a cylinder to form a carcass band, unnecessary irregularities on the outer face of the carcass band can be advantageously removed.

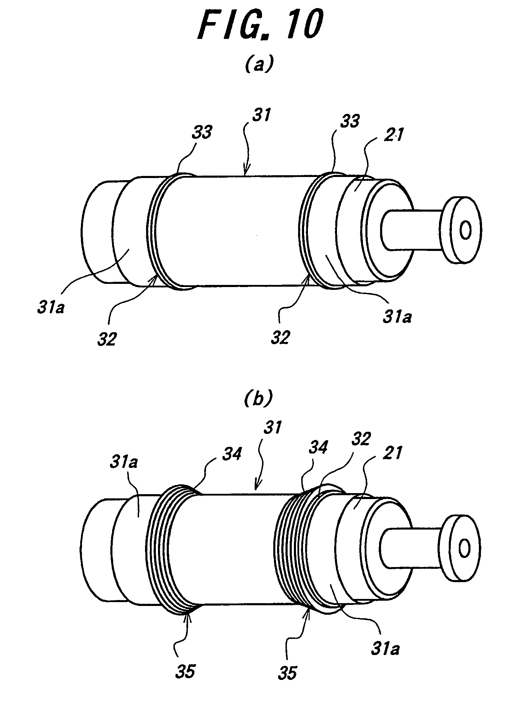

FIG. 10 is a perspective view illustrating a case that a ply cord layer is arranged on outer circumferential sides of the thus formed innerliner 23 and toe rubber 25 and the like in form of a cylinder to constitute a carcass band and further the other green case constituent members are formed on an outer circumferential side thereof.

For example, after the innerliner 23, the toe rubber 25 and the like are formed on the band building drum 21, at least one ply cord layer is wound and attached on an outer circumferential side thereof to form a cylindrical carcass band 31 having a given length in an axial direction thereof, and thereafter cushion rubbers 32 located at given intervals in the axial direction and at an inner circumferential side of a bead core to be fitted later are formed on the outer circumference thereof by winding an uncured rubber strip 33 as shown in FIG. 10(a).

Thereafter, as shown in FIG. 10(b), the uncured rubber strip 34 is wound and laminated over a given range in a place adjacent to the cushion rubber 32 toward a central portion side of the carcass band 31 to form a bead filler 35 having expected shape and size.

In this case, the bead filler 35 may be formed by winding and laminating one kind of the strip, or may be formed by winding and laminating two or more kinds of strips simultaneously or in given order.

Also, the strip may contain a filler therein.

After the arrangement of the bead filler 35, rubber chafer, sidewall and other required green case constituent members are further formed by winding uncured rubber strips as mentioned above in addition to the arrangement of bead cores on the cushion rubber 32, turning of each end portion 31a of the carcass band 31 and the like, whereby a given green case can be built.

Under a large expansion deformation of a central portion of the thus obtained green case in its axial direction at a subsequent shaping step or the like, belt, tread and so on are attached to form a green tire.

Although the above is explained with respect to the formation of the green case constituent members on the band building drum, the invention is naturally applicable to the building on the green case building drum and the building of a green case for a so-called coreless tire having no bead core.

Also, the invention is applicable to the formation of cushion rubber disposed at an inner circumferential side of the carcass band, belt under-cushion disposed between the carcass band and the belt and so on.

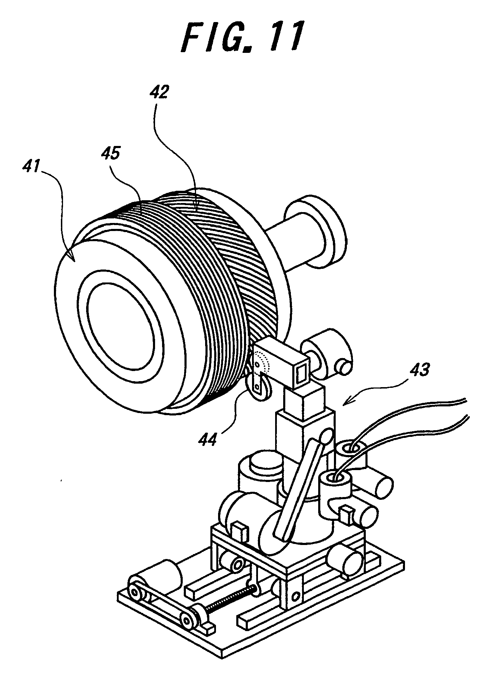

FIG. 11 is a perspective view illustrating a belt-tread building step, which shows a case that a tread as a belt-tread constituent member is formed on an outer circumference of a belt formed on a circumferential face of a building drum.

Numeral 41 is a belt-tread building drum rotating at a given speed as a building drum, numeral 42 a belt cylindrically formed on the circumferential face of the drum by winding one or more belt cord layers, and numeral 43 a fixed displacement extruder reciprocally moving over a given range in an axial direction of the belt-tread building drum 41.

In this case, an uncured rubber strip 45 extruded through a roller die 44 of the fixed displacement extruder 43 and having a size of 3-20 mm in width and about 0.2-3 mm in thickness and a required cross-sectional profile shape is spirally wound on an outer circumference of the belt 42 under the rotation of the belt-tread building drum 41 and the translation movement of the fixed displacement extruder 43, and the winding position is displaced once or plural times over a given range in the axial direction of the drum while overlapping at least a part of the strip in the widthwise direction every winding to thereby form a tread having expected shape and size as a whole.

Moreover, when the tread is comprised of a base tread and a cap tread having different rubber materials, or when at least one of the base tread and the cap tread is made from plural rubber materials, uncured rubber strips having different kinds of rubber or further different cross-sectional profile shapes and the like are wound and laminated simultaneously or in given order, whereby the base tread or the cap tread or a part thereof can be formed.

In this case, therefore, the tread or the like as a belt-tread constituent member is formed directly and efficiently, and also a joint portion can be removed from the tread or the like on its circumference and the scattering of the size or the like of the strip 45 can be effectively offset and absorbed by plural windings, so that the uniformity, balance and the like of the product tire can be largely improved. After the formation of the tread, a mini-side and other belt-tread constituent member are formed within a given range in the same manner as mentioned above to form an expected belt-tread band.

The given belt-tread band after the formation on the belt-tread building drum 41 is taken out from the building drum 41 and positioned on the outer circumferential side of the separately formed green case, and then the central portion of the green case in its axial direction is largely expanded and deformed by the shaping of the green case to attach the outer circumferential side to the belt-tread band, whereby a green tire is built.

Although the invention is explained with reference to the drawings, other belt-tread constituent members such as a tread under-cushion disposed between the tread and the belt and an electrically conductive layer extending from the tread surface to the belt or a base tread having an electric conductivity in the widthwise central portion of the tread can be formed by the winding of the uncured rubber strip.

As seen from the above, in the method of producing the tire according to the invention, the required tire constituent members such as green case constituent members, belt-tread constituent members and the like are formed by directly winding the uncured rubber strip on the building drum, so that the preparation for previously forming and storing the tire constituent members is unnecessary and it is possible to eliminate the operating number, time, occupying space and the like for such a preparation, and it is also possible to easily and rapidly cope with the change in the size, shape and the like of the tire constituent members to largely enhance the tire building efficiency and hence the productivity of the green tire. Also, the joint portion is removed from the tire constituent member and the variation of size, mass and the like in the tire constituent member in the widthwise direction and circumferential direction of the tire can be effectively prevented to largely improve the uniformity, balance and the like of the product tire.

Furthermore, the tire constituent members such as green case constituent members, belt-tread constituent members and the like or a part thereof are formed by winding a strip made of uncured rubber, which is a material in accordance with a required purpose and has required shape and size, so that even when the tire constituent members and the like having expected size and shape are made of plural rubber materials, they can be always and surely formed without the instability of the shape and the like. In addition, the lowering of the position precision due to the winding of the previously formed tire constituent member itself can be prevented to further improve the uniformity and balance of the product tire and increase the building operation efficiency. Moreover, the degradation of the uniformity, balance and other performances due to the presence of the joint portion of the constituent member can be sufficiently prevented.

## Claims

1. A method of producing a tire comprising the steps of winding an uncured rubber strip (5) on an outer circumferential side of a building drum (1) at a band building step or a green case building step in the formation of a green tire to form a green case constituent member or a part thereof, and shaping the green case after the building of a green case, and sticking a belt and a tread onto an outer circumferential side thereof, **characterized in that** the winding of the strip (5) is directly carried out on the building drum (1) so as to overlap at least parts of the strip in the widthwise direction with each other, and a cross-sectional shape of the strip is a slant face wherein at least one side wall of the strip is inclined at a given angle with respect to a vertical face, and the uncured rubber strip (5) has a width of 3 to 20 mm and a thickness of 0,2-3mm.

2. A method as claimed in claim 1, **characterized in that** two or more kinds of the strips are simultaneously or sequentially wound.

3. A method as claimed in claim 1 or 2, **characterized in that** the strip is wound on an outer circumferential side of a carcass band (3) at a somewhat enlarged state or a non-enlarged state thereof prior to the shaping of the green case.

4. A method as claimed in any of claims 1 to 3, **characterized in that** the green case constituent member of a part thereof subjected to a deformation in the building of the green case is formed by winding the strip.

5. A method as claimed in any of claims 1 to 4, **characterized in that** the green case constituent member or a part thereof subjected to a deformation in the shaping of the green case is formed by winding the strip.

6. A method as claimed in any of claims 1 to 5, **characterized in that** the strip is wound prior to the formation of a carcass band.

## Patentansprüche

1. Verfahren zur Herstellung eines Reifens, das die Schritte Aufwickeln eines unvulkanisierten Gummistreifens (5) auf eine Außenumfangsseite einer Reifenwickeltrommel (1) bei einem Wulstband-Konfektionierschritt oder einem Rohlingshüllen-Konfektionierschritt bei der Bildung eines Reifenrohlings umfasst, um ein Bestandteil einer Rohlingshülle oder eines Teils davon zu bilden und die Rohlingshülle nach der Konfektionierung einer Rohlingshülle zu formen und einen Gürtel und eine Lauffläche auf eine Außenumfangsseite davon zu kleben, **dadurch gekennzeichnet, dass** das Aufwickeln des Streifens (5) direkt auf der Reifenwickeltrommel (1) durchgeführt wird, damit mindestens Teile des Streifens einander in der Breitenrichtung überlappen und ein Querschnittsprofil des Streifens eine Schrägfläche ist, wobei mindestens eine Seitenwand des Streifens in einem gegebenen Winkel in Bezug auf eine vertikale Fläche geneigt ist und der unvulkanisierte Gummistreifen (5) eine Breite von 3 bis 20 mm und eine Dicke von 0,2 - 3 mm aufweist.

2. Verfahren nach Anspruch 1, **dadurch gekennzeichnet, dass** zwei oder mehrere Streifenarten gleichzeitig oder sequenziell gewickelt werden.

3. Verfahren nach Anspruch 1 oder 2, **dadurch gekennzeichnet, dass** der Streifen auf eine Außenumfangsseite eines Karkassenbands (3) in einem ein wenig vergrößerten Zustand oder einem nicht vergrößerten Zustand davon, vor dem Formen der Rohlingshülle, gewickelt wird.

4. Verfahren nach einem der Ansprüche 1 bis 3, **dadurch gekennzeichnet, dass** der Rohlingshüllen-Bestandteil oder ein Teil davon, der einer Verformung beim Konfektionieren der Rohlingshülle unterworfen wird, durch Wickeln des Streifens gebildet wird.

5. Verfahren nach einem der Ansprüche 1 bis 4, **dadurch gekennzeichnet, dass** der Rohlingshüllen-Bestandteil oder ein Teil davon, der einer Verformung beim Formen der Rohlingshülle unterworfen wird, durch Wickeln des Streifens gebildet wird.

6. Verfahren nach einem der Ansprüche 1 bis 5, **dadurch gekennzeichnet, dass** der Streifen vor der Bildung eines Karkassenbands gewickelt wird.

## Revendications

1. Procédé de production d'un bandage pneumatique, comprenant les étapes d'enroulement d'un ruban de caoutchouc non vulcanisé (5) sur un côté circonférentiel externe d'un tambour de confection (1) lors d'une étape de confection d'une bande ou d'une étape de confection d'un bandage cru pendant la formation d'un bandage pneumatique cru, pour former un élément constitutif d'un bandage cru ou une partie de celui-ci, et de formage du bandage cru après la confection du bandage cru, et de collage d'une ceinture et d'une bande de roulement sur un côté circonférentiel externe du tambour, **caractérisé en ce que** l'enroulement du ruban (5) est effectué directement sur le tambour de confection (1), de sorte à entraîner le chevauchement mutuel d'au moins certaines parties du ruban dans la direction de la largeur, une forme de section transversale du ruban étant constituée par une face inclinée, au moins une paroi latérale du ruban étant inclinée à un angle défini par rapport à une face verticale, le ruban de caoutchouc non vulcanisé (5) ayant une largeur comprise entre 3 et 20 mm et une épaisseur comprise entre 0,2 et 3 mm.

2. Procédé selon la revendication 1, **caractérisé en ce que** deux ou plusieurs types de ruban sont enroulés de manière simultanée et séquentielle.

3. Procédé selon les revendications 1 ou 2, **caractérisé en ce que** le ruban est enroulé sur le côté circonférentiel externe d'une bande de carcasse (3), celle-ci se trouvant dans un état légèrement agrandi ou non agrandi avant le formage du bandage cru.

4. Procédé selon l'une quelconque des revendications 1 à 3, **caractérisé en ce que** l'élément constitutif du bandage cru ou une partie de celui-ci, soumis à une déformation lors de la confection du bandage cru, est formé par enroulement du ruban.

5. Procédé selon l'une quelconque des revendications 1 à 4, **caractérisé en ce que** l'élément constitutif du bandage cru ou d'une partie de celui-ci , soumis à une déformation lors du formage du bandage cru, est formé par enroulement du ruban.

6. Procédé selon l'une quelconque des revendications 1 à 5, **caractérisé en ce que** le ruban est enroulé avant la formation de la bande de carcasse.
